# DEMANDE DE BREVET EUROPEEN

(11) **EP 2 279 934 A1**
(43) Date de publication de la demande: **02.02.2011**
(21) Numéro de dépôt: 10368029.4
(22) Date de dépôt: 16.07.2010
(51) Int. Cl.: B62J 7/04

(54) **Dispositif pour le transport de bagages et objets divers pour scooter**

(30) Priorité: 20.07.2009 FR 0903546
(71) Demandeur: Colin, Regis, 06000 Nice (FR)
(72) Inventeur: Colin, Regis, 06000 Nice (FR)

(57) **Abrégé**

Porte bagage amovible pour le transport de bagages et objets divers pour scooter caractérisé en ce qu'il comprend:
une structure en S (f1 et f2) comprenant deux supports (f4,f5 ou f6) reliés par une ame dans le coffre du scooter et destiné a fixer la structure en S disposé de part et d'autre du scooter destiné à recevoir les bagages et différents objets;
la fixation se fait par la fermeture de la selle, une foi le réglage (28 et 23) effectué. Le montage et démontage est très simple.

## Description

La présente invention concerne un dispositif pour le transport de bagages et de valises ainsi que le « top case » et divers objets, réservés aux scooters.

Traditionnellement sur le marché les systèmes sont effectués à l'aide de sangles et souvent uniquement adaptés au transport des bagages lors des déplacements de loisirs. Ce montage est souvent compliqué, d'autre part les sangles passent sur la selle passager, ce qui risque parfois de rendre l'assise inconfortable.

De plus ce système ne permet que d'accrocher des sacoches souples en tissus de petite contenance n'assurant pas toujours l'étanchéité parfaite dans certaines situations.

En tout état de cause ce montage ne permettant pas d'ajouter un « top case » ni d'autres objets, réduit la capacité de chargement et d'utilisation.

On constate qu'il existe un besoin d'un support qui permettrait le transport de toutes valises et tous objets tout en étant d'une grande simplicité à mettre en oeuvre et qui s'adapte à un grand nombre de scooters actuellement sur le marché.

Le dispositif selon l'invention permet de remédier à cet inconvénient.

De plus il apparaît indispensable que ce système, associé à un scooter, puisse également être utilisé par certains professionnels lors de leurs déplacements ou de leurs interventions étant donné les difficultés à trouver une place pour se garer, toutefois il ne faut pas que cet accessoire oblige son propriétaire à le laisser en permanence.

Pour atteindre ces objectifs, l'invention concerne un porte-bagages amovible pour scooter.

Selon les modes particuliers de sa réalisation ce dispositif s'adapte indifféremment aux scooters actuels et futurs.

Les dessins annexés illustrent l'invention :
- les figures F1, F2 et F3 représentent la structure.
- les figures F4, F5 et F6 représentent les supports d'adaptation pour différents scooters.

En référence à ces desseins, le dispositif comporte des supports à hauteur et largeur variable permettant de s'adapter aux scooters existants et futurs. L'invention se caractérise par cette possibilité de modification des côtes des supports sans modification de la structure et de l'invention.

Il comporte selon une première caractéristique :
- une structure porteuse en deux parties indépendantes, droite et gauche, reliées entre elles par des supports portant appui de part et d'autre sur le coffre du scooter.
- les structures comprennent de part et d'autre des supports latéraux pour la fixation éventuelle de « top case » et autres. Selon des modes particuliers de réalisation : le réglage des structures se fait dans le coffre et latéralement par des écrous situés dans le coffre et sur la partie latérale ce qui fait que cette invention s'adapte à un grand nombre de scooter.

Une fois le réglage effectué, pour la pose du porte bagage, il suffit de lever la selle, de poser la structure et de refermer la selle. La fermeture de la selle par sa pression en fait sa fixation, et le verrouillage de la selle assure la sécurité du porte bagage et empêche son démontage lors du stationnement du scooter.

Il est intéressant de constater que ce dispositif n'entraîne pas de gêne pour le passager, en cas pose de valises.

Sa simplicité de pose et de dépose en fait un atout majeur pour les personnes qui ne souhaitent pas le laisser à demeure.

Ce produit peut servir à un grand nombre de professionnels lors de leur déplacement à domicile pour petits dépannages en tout genre.

1- porte-bagages amovible pour scooter **caractérisé en ce qu**'il comprend :
- deux structures porteuses en S comprenant deux parties, une à droite (F1) et une à gauche (F2) destinées à être disposées de part et d'autre du scooter reliées entre elles par des supports situés dans le coffre du scooter et latéralement. Les structures, sont maintenues entre elles par les supports (F4, F5 et F6) eux-mêmes reliés par une âme (23), fixées par des boulons et des écrous à oreilles.
- ce dispositif le caractérise par son réglage simple (23) tout en réduisant très faiblement la capacité du coffre.
- les parties (15 et 16) passent au-dessus de la poignée gauche et droite et se règlent en largeur par une âme bloquée par des vis et des écrous à oreilles ce qui permet l'adaptation sur plusieurs modèles de scooters.
- la partie (5) à l'avant de la structure sert au réglage et à la fixation et reçoit la partie 6 du support (F4 ou F6) qui peut être différent en fonction du modèle du scooter.
- la partie (15) à l'arrière de la structure sert au réglage et à la fixation et reçoit la partie du support 16, (F5) qui peut être différent en fonction du modèle du scooter.
- les parties (14) servant à recevoir les parties (3 et 4) destinées à la fixation d'un top case et différents objets sont reliées entre elles.
- les parties (1) reliées aux parties (13) servent à maintenir le pied ou les roulettes des valises et à donner la donner de la rigidité à l'ensemble de la structure.
- les plis (18 et 19) à l'arrière, et les plis (8 et 9) à l'avant, servent à la pose des supports de la structure sur les montants du coffre.
- les parties (13) servent à recevoir les objets.

## Revendications

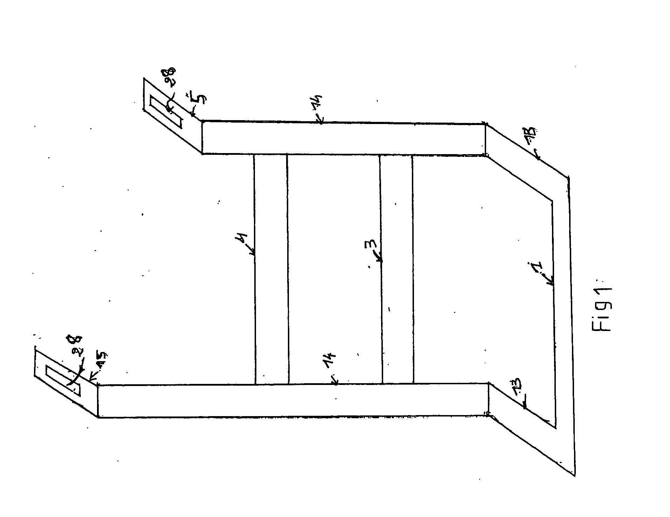

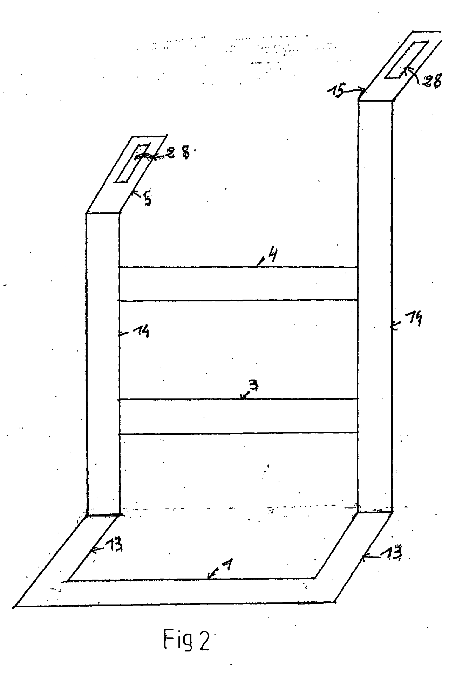

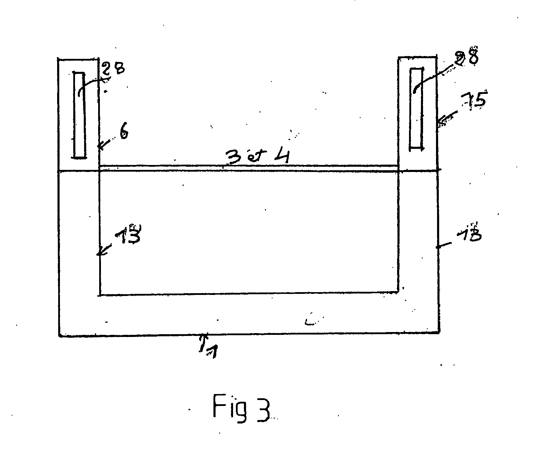

1. Porte bagage amovible ou objets divers sur un scooter **caractérisé en ce qu'**il comprend :
- deux structures porteuses en S (Fig 1 et Fig 2) comprenant deux parties droite et gauche destinées à êtes disposées de part et d'autre du cadre du scooter, reliées entre elles par des supports situés dans le coffre du scooter (12) et une âme (23 et 28), situés dans le coffre du scooter et latéralement.
- les structures et supports sont maintenus entre eux par des vis et des écrous.

2. Porte-bagages amovible selon la revendication 1, **caractérisé en ce qu'**il comprend des moyens (17) et (23) de réglage de la largeur du coffre du scooter et le réglage de la largeur de la carrosserie (12 et 28).

3. Porte-bagages amovible selon les revendications 1 et 2 **caractérisé en ce qu'**il comprend les réglages des supports de fixation par une âme (23 et 28) et un blocage par vis et écrou.

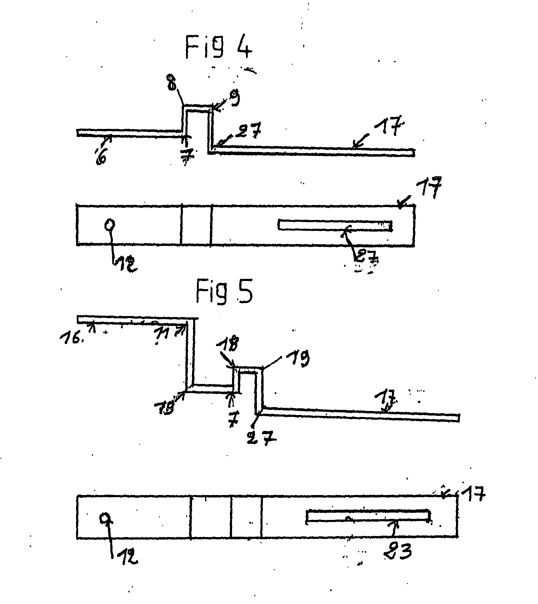

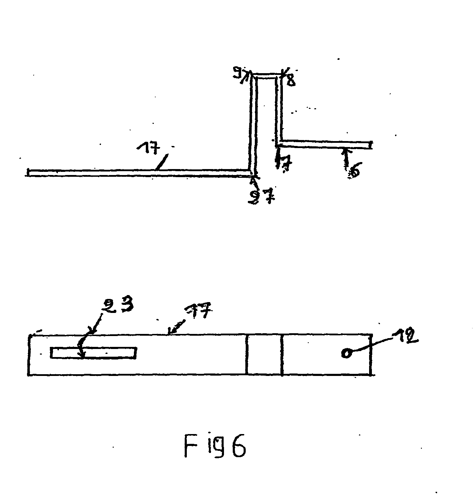

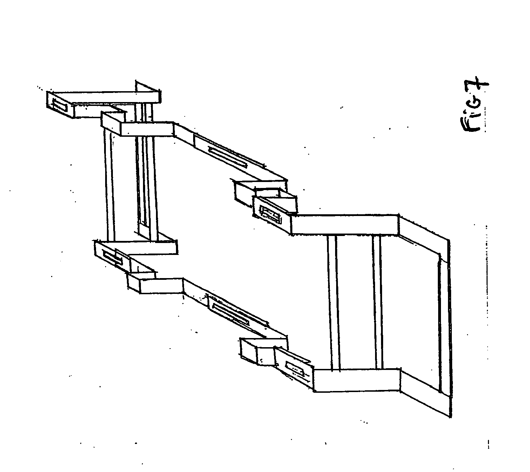

4. Porte-bagages amovible selon les revendications 2 et 3 **caractérisé en ce qu'**il comprend un percement (12) situé sur les supports (Fig 4, Fig 5 et Fig 6) sur la partie (6 et 16) servant à relier le support à la structure porteuse.

5. Porte-bagages amovible selon les revendications 1, 3 et 4 **caractérisé en ce qu'**il comprend des plis ( 8, 9, 18 et 19) servant d'appui sur les montants du coffre et de blocage quand la selle est fermée.

6. Porte-bagages amovible selon les revendications 1 et 2, **caractérisé en ce qu'**il comprend les parties 6 et 16 (des figures 4, 5 et 6) servant au réglage de la largeur de la carrosserie du scooter et de la fixation des structures.

7. Porte-bagages amovible selon la revendication 1 **caractérisé en ce qu'**il comprend trois supports 1, 3 et 4 (Fig 1 et Fig 2) pour la fixation de top case et autres objets.

8. Porte-bagages amovible selon les revendications 1 à 7 **caractérisé en ce qu'**il comprend une protection de la structure par une mousse auto collante sur les parties qui reçoivent les objets et celles en contact avec la carrosserie.
